# EUROPEAN PATENT SPECIFICATION

(11) **EP 2 100 650 B1**
(45) Date of publication and mention of the grant of the patent: **13.10.2010**
(21) Application number: 09250712.8
(22) Date of filing: 13.03.2009
(51) Int. Cl.: B01D 19/04, C08K 9/06

(54) **Preparation of antifoaming oil compound and antifoam composition**
Herstellung einer Schaum verhütenden Ölverbindung und Schaumverhütungszusammensetzung
Préparation d'un composé d'huile antimousse et composition antimousse

(30) Priority: 14.03.2008 JP 2008065462
(43) Date of publication of application: 16.09.2009
(73) Proprietor: Shin-Etsu Chemical Co., Ltd., Tokyo 100-0004 (JP)
(72) Inventor: Takewaki, Kazuyuki, Annaka-shi, Gunma-ken (JP); Itagaki, Akinari, Annaka-shi, Gunma-ken (JP)
(74) Representative: Stoner, Gerard Patrick

(56) References cited:
- EP-A- 0 776 751
- GB-A- 1 297 390
- GB-A- 1 525 943
- JP-A- 2005 324 140

## Description

### TECHNICAL FIELD

This invention relates to methods for preparing an oil compound for use as an antifoam agent, typically for use to form a silicone-based antifoam composition having effective foam-breaking, persistent antifoaming ability and internal addition stability in foaming liquids, especially alkaline foaming liquids, and an antifoam composition comprising the oil compound.

### BACKGROUND

Silicone-based antifoam agents have many superior properties to other antifoam agents and are widely used in foam-generating steps involved in chemical, food, oil, fabric, paper, pulp, pharmaceutical and other industries. Commonly used are oil compound type antifoam agents comprising silicone oils such as dimethylpolysiloxane, methylphenylpolysiloxane and methylvinylpolysiloxane in admixture with finely divided silica, and emulsion type antifoam agents obtained by dispersing these oil compounds in water together with surfactants. The emulsion type antifoam agents, however, have the problem that under rigorous conditions including high temperatures, high alkalinity and high shear forces, emulsified particles are broken to detract from the antifoaming ability. The substitutes for the emulsion type antifoam agents, proposed thus far, are self-emulsifying antifoam agents using polyoxyalkylene-modified organopolysiloxane in admixture with oil compound as described in JP-A S51-71886, JP-B S54-43015, JP-B S52-19836, and JP-B S52-22638.

These silicone-based antifoam agents, however, suffer from the problem that their antifoaming ability declines or separation and sedimentation occur during long-term contact with foaming liquids. The problem becomes outstanding particularly when the foaming liquids are alkaline.

When the foam-generating step continues long, the antifoaming ability lowers from the initial with the lapse of time. Then an additional amount of the antifoam agent must be supplemented, leading to a lowering of yield and troubles due to addition of a large amount of the antifoam agent.

A variety of proposals were made to overcome these problems and to further improve antifoaming ability. For example, with respect to the silica used in oil compounds, JP-B S52-31836 teaches the treatment of silica with chlorosilanes to be hydrophobic. JP-B S51-35556 discloses the treatment of silica with nitrogen-containing organosilicon compounds. It would be desirable to further improve the antifoaming ability.
Citation List
Patent Document 1: JP-A S51-71886
Patent Document 2: JP-B S54-43015
Patent Document 3: JP-B S52-19836
Patent Document 4: JP-B S52-22638
Patent Document 5: JP-B S52-31836
Patent Document 6: JP-B S51-35556

An object of the invention is to provide a new and useful method for preparing an oil compound for use as an antifoam agent to formulate a silicone-based antifoam composition having effective foam-breaking, persistent antifoaming ability and internal addition stability in foaming liquids, especially alkaline foaming liquids, and an antifoam composition comprising the oil compound.

The inventors have found that an oil compound is prepared by the first step of kneading (A) an essentially hydrophobic organopolysiloxane and (B) finely divided silica with (C) an amount of a silica surface treating agent and (D) water or with (E) aqueous ammonia, the second step of heat treating the kneaded mixture resulting from the first step, the third step of kneading the kneaded mixture resulting from the second step with (C) a larger amount of the silica surface treating agent, and the fourth step of heat treating the kneaded mixture resulting from the third step; and that this oil compound is suited for use as an antifoam agent to formulate a silicone-based antifoam composition having effective foam-breaking, persistent antifoaming ability and internal addition stability even in alkaline foaming liquids.

Accordingly, the invention provides a method for preparing an oil compound for use as an antifoam agent, comprising
the first step of kneading (A) 100 parts by weight of an essentially hydrophobic organopolysiloxane having a viscosity of 10 to 100,000 mm²/s at 25°C and (B) 1 to 30 parts by weight of finely divided silica having a specific surface area of at least 50 m²/g with (C) 0.1 to 3% by weight based on the silica of a silica surface treating agent and (D) 0 to 50% by weight based on the silica surface treating agent of water or with (E) 0.03 to 3% by weight, calculated as ammonia, based on the silica of aqueous ammonia,
the second step of heat treating the kneaded mixture resulting from the first step,
the third step of kneading the kneaded mixture resulting from the second step with (C) 5 to 20% by weight based on the silica of the silica surface treating agent, and
the fourth step of heat treating the kneaded mixture resulting from the third step.

Most often, the silica surface treating agent comprises hexamethyldisilazane.

Also provided is an antifoam composition comprising the oil compound prepared by the above method.

### ADVANTAGEOUS EFFECTS

We find that oil compounds obtained by the methods proposed are suited for use as an antifoam agent to formulate a silicone-based antifoam composition having effective foam-breaking, persistent antifoaming ability and internal addition stability even in alkaline foaming liquids.

### FURTHER EXPLANATIONS; OPTIONS AND PREFERENCES

Components (A) to (E) used herein are described.

Component (A) is an organopolysiloxane which is essentially hydrophobic. As used herein, the term "essentially hydrophobic" means that the organopolysiloxane as a whole displays hydrophobic nature even when some functional groups therein are hydrophilic.

The essentially hydrophobic organopolysiloxane (A), which may be either linear or branched, preferably has the average compositional formula (I).

RₘSiO_{(4-m)/2} (I)

Herein R which may be the same or different denotes a substituted or unsubstituted, monovalent hydrocarbon group of 1 to 18 carbon atoms. Examples of the monovalent hydrocarbon groups represented by R include alkyl groups such as methyl, ethyl, propyl, butyl, pentyl, hexyl, heptyl, octyl, nonyl, decyl, dodecyl, tridecyl, tetradecyl, hexadecyl and octadecyl; cycloalkyl groups such as cyclohexyl; alkenyl groups such as vinyl and allyl; aryl groups such as phenyl and tolyl; aralkyl groups such as styryl and α-methylstyryl; and substituted forms of the foregoing in which some or all carbon-bonded hydrogen atoms are substituted by halogen atoms, cyano, amino or hydroxyl groups, such as, for example, chloromethyl, 3-chloropropyl, 3,3,3-trifluoropropyl, cyanoethyl, 3-aminopropyl, and N-(β-aminoethyl)-γ-aminopropyl. It is preferred for antifoaming ability and economy that at least 80 mol%, especially at least 90 mol% of all R be methyl. The subscript m is a positive number from 1.9 to 2.2, and preferably from 1.95 to 2.15. The organopolysiloxane may be terminated with a triorganosilyl group of the formula: R₃Si- or a diorganohydroxysilyl group of the formula: HOR₂Si-.

From the standpoints of antifoaming ability and working, the essentially hydrophobic organopolysiloxane (A) should have a viscosity at 25°C of 10 to 100,000 mm²/s, and preferably 50 to 30,000 mm²/s, as measured by an Ostwald viscometer. A viscosity of less than 10 mm²/s leads to a poor antifoaming ability whereas a viscosity of more than 100,000 mm²/s leads to a silicone oil compound having too high a viscosity to work.

Component (B) is finely divided silica which may be any of well-known silica species, for example, fumed silica, precipitated silica, and fired silica. Silica may be used alone or in admixture of two or more species. The finely divided silica should have a specific surface area of at least 50 m²/g, preferably 100 to 700 m²/g, and more preferably 150 to 500 m²/g, as measured by the BET method. With a surface area of less than 50 m²/g, an appropriate antifoaming ability is not attainable.

Component (C) is a silica surface treating agent, which is effective for the treatment of component (B) for rendering its surfaces hydrophobic and rendering it to be more wettable to and dispersible in component (A). Suitable silica surface treating agents include organosilazanes such as hexamethyldisilazane, 1,3-divinyl-1,1,3,3-tetramethyldisilazane, and 1,1,1,3,5,5,5-heptamethyl-3-vinyltrisilazane; amino-containing organosilanes such as dimethylaminotrimethylsilane and dimethylaminodimethylvinylsilane; and organosilicon compounds such as trimethylmethoxysilane and dimethyldimethoxysilane. Inter alia, hexaorganodisilazanes such as hexamethyldisilazane are preferred.

Component (D) is water which plays the role of accelerating decomposition of component (C) and thus enhancing the rate of surface treatment of component (B). Since component (B) may sometimes contain water in the form of adsorption water or the like, component (D) need not be essential.

Component (E) is aqueous ammonia. It substitutes for a mixture of components (C) and (D) in the first step and functions to improve the wettability, affinity and dispersibility of finely divided silica (B) with respect to the essentially hydrophobic organopolysiloxane (A). As component (E), an aqueous ammonia solution having an ammonia concentration of about 25 to about 30 wt% is advantageously used.

The method for preparing a silicone oil compound according to the invention is characterized by two stages of compounding, i.e., first and second compounding stages. The first compounding stage has the main purpose of fixing the polymer component or organopolysiloxane to surfaces of silica. The main purpose of the second compounding stage is to treat silica with the silica surface treating agent. The method is thus **characterized in that** a larger amount of the silica surface treating agent is used in the second compounding stage than in the first compounding stage.

In one embodiment of the invention, the silicone oil compound is prepared through
the first compounding stage including step (1) of kneading 100 pbw of component (A) and 1 to 30 pbw of component (B) with 0.1 to 3 wt% based on component (B) of component (C) and 0 to 50 wt% based on component (C) of component (D), and step (2) of heat treating the kneaded mixture resulting from step (1), and
the second compounding stage including step (3) of kneading the kneaded mixture resulting from step (2) with 5 to 20 wt% based on component (B) of component (C), and step (4) of heat treating the kneaded mixture resulting from step (3).

In another embodiment of the invention, the silicone oil compound is prepared through
the first compounding stage including step (i) of kneading 100 pbw of component (A) and 1 to 30 pbw of component (B) with 0.03 to 3 wt% (calculated as ammonia) based on component (B) of component (E), and step (ii) of heat treating the kneaded mixture resulting from step (i), and
the second compounding stage including step (iii) of kneading the kneaded mixture resulting from step (ii) with 5 to 20 wt% based on component (B) of component (C), and step (iv) of heat treating the kneaded mixture resulting from step (iii).

Using the silicone oil compound prepared through first to fourth steps as an antifoam agent, an antifoam composition can be formulated which has effective foam-breaking, persistent antifoaming ability and internal addition stability even in foaming liquids, especially alkaline foaming liquids.

In the first step, components (A) to (C), components (A) to (D), or components (A), (B) and (E) are kneaded preferably at a temperature of up to 130°C, more preferably up to 100°C. External heating is not necessarily needed, and kneading may be effected at room temperature (e.g., 10-30°C). The temperature within the system rises by heat release due to frictional resistance during kneading. Then it may suffice to adjust the elevated temperature to or below 130°C, especially to or below 100°C. If kneading is effected above 130°C, component (C) or (E) will volatilize off, leading to a loss of its function. The treating time of the first step is not unequivocally determined since it largely depends on the type and size of a particular kneading apparatus. The treating time is usually 0.1 to 3 hours, and preferably 0.5 to 2 hours.

An amount of component (B) used is 1 to 30 parts, preferably 5 to 15 parts by weight per 100 parts by weight of component (A). Less than 1 pbw of component (B) fails to produce a satisfactory antifoaming ability whereas more than 30 pbw leads to a silicone oil compound which has too high a viscosity to work.

An amount of component (C) used in the first step is 0.1 to 3% by weight based on the weight of component (B), preferably 0.5 to 3 wt% and more preferably 1 to 2.5 wt% based on the weight of component (B). Less than 0.1 wt% of component (C) is not effective in fixing the polymer component to silica surfaces whereas more than 3 wt% achieves little further effects and is uneconomical.

An amount of component (D) used in the first step is 0 to 50% by weight based on the weight of component (C), preferably 1 to 50 wt% and more preferably 2 to 40 wt% based on the weight of component (C). If the amount of component (D) is more than 50 wt%, the heat treatment of the second step requires a longer time, losing efficiency. As pointed out above, component (B) may contain adsorption water or another form of water, and if so, component (D) need not be added.

Component (E) is compounded in the first step when components (C) and (D) are not used. Component (E) is used in such an amount as to provide 0.03 to 3% by weight of ammonia (NH₃) based on the weight of component (B), preferably 0.06 to 1.5 wt% and more preferably 0.1 to 1 wt% of ammonia based on the weight of component (B). Less than 0.03 wt% of ammonia is not effective for fixing the polymer component to silica surfaces whereas more than 3 wt% achieves little further effects and is uneconomical.

The second step is a heat treatment for removing the decomposition residues of component (C) and the excess of component (D), or component (E). Typically the kneaded mixture is heat treated at a temperature of 130 to 200°C, preferably 150 to 180°C, and also preferably while kneading. A heat treatment temperature below 130°C may fail to fully remove the decomposition residues of component (C) and the excess of component (D) whereas a temperature above 200°C can cause degradation or decomposition of component (A). The treating time of the second step is not unequivocally determined since it largely depends on the type and size of a particular kneading apparatus. The treating time is usually 0.1 to 4 hours, and preferably 0.5 to 2 hours.

In the third step, component (C) is added to the kneaded mixture resulting from the second step whereupon the silica surface treating agent and silica are uniformly dispersed. For the same reason as in the first step, kneading in the third step should preferably be effected at a temperature of up to 130°C, more preferably up to 100°C. Also in the third step, kneading may be effected at room temperature (e.g., 10-30°C). The treating time of the third step is not unequivocally determined since it largely depends on the type and size of a particular kneading apparatus. The treating time is usually 0.1 to 3 hours, and preferably 0.5 to 2 hours.

An amount of component (C) used in the third step is 5 to 20% by weight based on the weight of component (B), preferably 10 to 15 wt% based on component (B). Less than 5 wt% of component (C) fails to achieve effective surface treatment of component (B) whereas more than 20 wt% is excessive and uneconomical.

The fourth step is a heat treatment for removing the decomposition residues of component (C). Typically the kneaded mixture is heat treated at a temperature of 130 to 200°C, preferably 150 to 180°C, and also preferably while kneading. A heat treatment temperature below 130°C may fail to fully remove the decomposition residues of component (C) and the excess of component (D) whereas a temperature above 200°C can cause degradation or decomposition of component (A). The treating time of the fourth step is not unequivocally determined since it largely depends on the type and size of a particular kneading apparatus. The treating time is usually 0.1 to 4 hours, and preferably 0.5 to 3 hours.

In the method of the invention, kneading may be performed in any kneading apparatus which include gate mixers, kneaders, and double-shaft type kneaders, but are not limited thereto. These kneading apparatus may be used in any of the first to fourth steps. As used herein, the term "kneading" is interchangeable with compounding, mixing, milling, or agitation.

The silicone oil compound obtained by kneading and heat treating the foregoing components in the specific order is ready for use as such or may be used as an antifoam agent to formulate an antifoam composition. Exemplary antifoam compositions comprising the silicone oil compound include solution type antifoam compositions having the silicone oil compound dispersed in a solvent, self-emulsifying antifoam compositions comprising the silicone oil compound in admixture with a polyoxyalkylene-modified organopolysiloxane, and emulsion type antifoam compositions obtained by well-known emulsifying techniques.

Where the solution type antifoam composition is formulated by dispersing the silicone oil compound in a solvent, examples of the solvent used herein include those solvents in which component (A), essentially hydrophobic organopolysiloxane is soluble, for example, toluene, xylene, hexane, chloroform, 2-butanone, and 4-methyl-2-pentanone.

In the solution type antifoam composition, the content of the silicone oil compound is preferably 5 to 80% and more preferably 30 to 70% by weight of the entire antifoam composition. Outside the range, an antifoam composition with a lower content of the oil compound may have a poor antifoaming ability whereas a higher content may compromise the solution type antifoam composition's main object of facilitating the dispersion of the oil compound.

Where the self-emulsifying antifoam composition is formulated by combining the silicone oil compound with a polyoxyalkylene-modified organopolysiloxane, the polyoxyalkylene-modified organopolysiloxane used typically has the general formula (II).

R¹₂R³SiO-(R¹₂SiO)ₓ- (R¹R²SiO)_{y}-SiR¹₂R³ (II)

In formula (II), R¹ which may be the same or different denotes a substituted or unsubstituted, monovalent hydrocarbon group of 1 to 18 carbon atoms, examples of which include alkyl groups such as methyl, ethyl, propyl, butyl, pentyl, hexyl, heptyl, octyl, nonyl, decyl, dodecyl, tridecyl, tetradecyl, hexadecyl and octadecyl; cycloalkyl groups such as cyclohexyl; alkenyl groups such as vinyl and allyl; aryl groups such as phenyl and tolyl; aralkyl groups such as styryl and α-methylstyryl; and substituted forms of the foregoing in which some or all carbon-bonded hydrogen atoms are substituted by halogen atoms, cyano, or amino groups, such as, for example, chloromethyl, 3-chloropropyl, 3,3,3-trifluoropropyl, cyanoethyl, 3-aminopropyl, and N-(β-aminoethyl)-γ-aminopropyl.

R² denotes a polyoxyalkylene group of the general formula (III).

-R⁴-O(CH₂CH₂O)ₐ-(CH₂(CH₃)CHO)_{b}-R⁵ (III)

Herein R⁴ is a divalent C₂-C₆ hydrocarbon group, examples of which include alkylene and alkenylene groups such as ethylene, propylene, butylene, pentene, and hexane. R⁵ is hydrogen, C₁-C₆ alkyl, acetyl or isocyano. Exemplary alkyl groups include methyl, ethyl, propyl, butyl and pentyl. The subscripts a and b are positive numbers satisfying 3 ≤ a+b ≤ 80, preferably 5 ≤ a+b ≤ 60, and a/b = 2/8 to 8/2, and preferably a/b = 2.5/7.5 to 7.5/2.5.

R³ denotes a group like R¹ or R², hydroxyl, or C₁-C₆ alkoxy. Exemplary groups of R³ are those exemplified for R¹ and R², and exemplary alkoxy groups include methoxy, ethoxy, propoxy and butoxy.

In formula (II), x is an integer of 5 to 200, preferably 20 to 150, and y is an integer of 1 to 30, preferably 1 to 20.

The polyoxyalkylene-modified organopolysiloxane may be used alone or in admixture of two or more. It preferably has a viscosity at 25°C of 10 to 10,000 mm²/s, more preferably 50 to 8,000 mm²/s, and even more preferably 500 to 5,000 mm²/s, as measured by an Ostwald viscometer.

Illustrative examples of the polyoxyalkylene-modified organopolysiloxane are given below.

(CH₃)₃SiO-[(CH₃)₂SiO]₃₀-[(CH₃)R'SiO]₅-Si(CH₃)₃

R': -C₃H₆O-(C₂H₄O)₃₀-(C₃H₆O)₁₀-C₄H₉, (CH₃)₃SiO-[(CH₃)₂SiO]₃₀-[(CH₃)RSiO]₃-Si(CH₃)₃
R': -C₃H₆O-(C₂H₄O)₂₀-(C₃H₆O)₂₀-C₄H₉, (CH₃)₃SiO-[(CH₃)₂SiO]₄₀-[(CH₃)RSiO]₄-Si(CH₃)₃
R': -C₃H₆O(C₂H₄O)₂₁(C₃H₆O)₇-COCH₃, (CH₃)₃SiO-[(CH₃)₂SiO]₅₀-[(CH₃)R"SiO]₆-[(CH₃)R"'SiO]₁-Si(CH₃)₃
R": -C₃H₆O-(C₂H₄O)₃₂-(C₃H₆O)₈-C₄H₉
R"': -C₁₂H₂₅

Where the self-emulsifying antifoam composition is formulated by combining the silicone oil compound with the polyoxyalkylene-modified organopolysiloxane, polyoxyalkylene polymers and nonionic surfactants may also be used. Exemplary polyoxyalkylene polymers include, but are not limited to, HO-[CH₂(CH₃)CHO]₃₅-H, HO-[CH₂(CH₃)CHO]₇₀-H, HO-(CH₂CH₂O)₄-[CH₂(CH₃)CHO]₃₀-H, CH₂=CHCH₂O-(CH₂CH₂O)₃₂-[CH₂(CH₃)CHO]₈-H, CH₂=CHCH₂O-(CH₂CH₂O)₂₂-[CH₂(CH₃)CHO]₂₂-C₄H₉, CH₂=CHCH₂O-(CH₂CH₂O)₁₀-CH₃.
Exemplary nonionic surfactants include sorbitan fatty acid esters, glycerol fatty acid esters, polyglycerol fatty acid esters, propylene glycol fatty acid esters, sucrose fatty acid esters, polyoxyethylene alkyl ethers, polyoxyethyleneoxypropylene alkyl ethers, polyoxyethylene fatty acid esters, polyoxyethylene sorbitol fatty acid esters, polyoxyethylene glycerol fatty acid esters, polyoxyethylene propylene glycol fatty acid esters, polyoxyethylene castor oil, and polyoxyethylene hardened castor oil.

In the self-emulsifying antifoam composition, the content of the silicone oil compound is preferably 5 to 80%, more preferably 10 to 70%, and even more preferably 20 to 60% by weight of the entire antifoam composition. Outside the range, an antifoam composition with a lower content of the oil compound may have a poor antifoaming ability whereas a higher content may compromise the self-emulsifying antifoam composition's main object of facilitating the dispersion of the oil compound.

Where the emulsion type antifoam composition is formulated, any well-known emulsifying techniques may be used. Suitable emulsifiers for helping emulsify the silicone oil compound include the polyoxyalkylene-modified organopolysiloxanes, polyoxyalkylenes, and nonionic surfactants described above.

In the emulsion type antifoam composition, the polyoxyalkylene-modified organopolysiloxanes may be used alone or in admixture and preferably in an amount of 0 to 30%, and more preferably 1 to 20% by weight of the entire antifoam composition. A composition containing more than 30 wt% of the polyoxyalkylene-modified organopolysiloxane may have a poor antifoaming ability.

In the emulsion type antifoam composition, the polyoxyalkylene serves as a co-emulsifier. It may be used alone or in admixture and is preferably used in an amount of 0 to 40%, and more preferably 0 to 20% by weight of the entire antifoam composition. A composition containing more than 40 wt% of the polyoxyalkylene may have a poor antifoaming ability. When added, the polyoxyalkylene is used in an effective amount, preferably at least 5 wt% of the composition.

Further in the emulsion type antifoam composition, the nonionic surfactant helps disperse the silicone oil compound in water. It may be used alone or in admixture and is preferably used in an amount of 0 to 20%, and more preferably 1 to 10% by weight of the entire antifoam composition. A composition containing more than 20 wt% of the surfactant may have a high viscosity and become inefficient to work.

The emulsion type antifoam composition has a content of the silicone oil compound which is preferably 5 to 50%, and more preferably 10 to 40% by weight of the entire antifoam composition. Outside the range, an antifoam composition with a lower content of the oil compound may have a poor antifoaming ability whereas a composition with a higher content of the oil compound may have a high viscosity and become inefficient to work.

In the emulsion type antifoam composition, water must be added in an amount necessary to emulsify the silicone oil compound, polyoxyalkylene-modified organopolysiloxane, polyoxyalkylene and nonionic surfactant. The amount of water in the composition is the balance to the sum of the contents of the respective components and is preferably 50 to 2,000 parts and more preferably 80 to 400 parts by weight per 100 parts by weight of the components combined.

The emulsion type antifoam composition may be prepared by mixing the predetermined amounts of the components (exclusive of water), and agitating and emulsifying them in water on a mixing/dispersing apparatus such as a homo-mixer, homogenizer or colloid mill while heating, if necessary. Preferably, the composition is prepared by uniformly mixing and dispersing the predetermined amounts of the components (exclusive of water), adding a portion of water, agitating the mixture for emulsification, adding the remaining portion of water, and uniformly agitating and mixing.

To the emulsion type antifoam composition, small amounts of preservatives and bactericides may be added for preservation purposes. Suitable preservatives and bactericides include sodium hypochlorite, sorbic acid, potassium sorbate, salicylic acid, sodium salicylate, benzoic acid, sodium benzoate, p-hydroxybenzoates, and isothiazolines. They are preferably added in an amount of 0 to 0.5% and more preferably 0.005 to 0.5% by weight of the entire antifoam composition.

### EXAMPLE

Examples of the invention are given below by way of illustration and not by way of limitation. In Examples, all parts and % are by weight, and the viscosity is measured at 25°C by an Ostwald viscometer.

### Example 1

Using a gate mixer, 100 parts of a trimethylsilyl-terminated dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, 0.1 part of hexamethyldisilazane as the silica surface treating agent, and 0.025 part of water were kneaded at room temperature for one hour. The mixer was then heated at a temperature of 150°C, whereupon kneading continued for a further one hour. The mixer was cooled below 130° C and charged with 0.75 part of hexamethyldisilazane, whereupon kneading continued for a further one hour. The mixer was heated again at a temperature of 150° C, whereupon kneading continued for a further 2 hours, yielding a silicone oil compound (a-1).

At room temperature, 30 parts of silicone oil compound (a-1) was mixed with 70 parts of a polyoxyalkylene-modified organosiloxane (a-2) having the average compositional formula:

R¹₂R³SiO-(R¹₂SiO)ₓ-(R¹R²SiO)_{y}-SiR¹₂R³

wherein R¹ and R³ denote -CH₃, R² denotes -C₃H₆O(C₂H₄O)₂₁(C₃H₆O)₂₁CH₃, x = 135, and y = 15, having a viscosity of 2,500 mm²/s. There was obtained an antifoam composition (A).

### Example 2

Using a gate mixer, 100 parts of a dimethylpolysiloxane capped with trimethylsilyl at an end of its molecular chain, containing CH₃SiO_{3/2} units in a molar fraction of 0.01 and having a viscosity of 8,000 mm²/s as the essentially hydrophobic organopolysiloxane, 12 parts of Nipsil HD-2 (Tosoh Silica Co., Ltd., specific surface area 300 m²/g) as the finely divided silica, and 0.24 part of aqueous ammonia (28% NH₃) were kneaded at room temperature for one hour. The mixer was then heated at a temperature of 150° C, whereupon kneading continued for a further one hour. The mixer was cooled below 130° C and charged with 0.75 part of hexamethyldisilazane, whereupon kneading continued for a further one hour. The mixer was heated again at a temperature of 150° C, whereupon kneading continued for a further 1 hour, yielding a silicone oil compound (b-1).

At room temperature, 30 parts of silicone oil compound (b-1) was mixed with 50 parts of a polyoxyalkylene-modified organosiloxane (b-2) having the average compositional formula:

R¹₂R³SiO-(R¹₂SiO)ₓ-(R¹R²SiO)_{y}-SiR¹₂R³

wherein R¹ and R³ denote -CH₃, R² denotes -C₃H₆O(C₂H₄O)_{25.5}(C₃H₆O)_{8.5}C₄H₉, x = 30, and y = 5, having a viscosity of 1,000 mm²/s and 20 parts of a polyoxyalkylene (b-3) having the average compositional formula: HO-(C₂H₄O)₂₅-(C₃H₆O)₃₅-H. There was obtained an antifoam composition (B).

### Example 3

An antifoam composition (C) was prepared by mixing 20 parts of silicone oil compound (a-1) prepared in Example 1 with 4 parts of sorbitol monostearate and 6 parts of polyoxyethylene (55) monostearate, heating the mixture for dissolution, adding 70 parts of water thereto, and agitating and emulsifying on a homomixer.

### Comparative Example 1

Using a gate mixer, 100 parts of the trimethylsilyl-terminated dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, 0.85 part of hexamethyldisilazane as the silica surface treating agent, and 0.21 part of water were kneaded at room temperature for one hour. The mixer was then heated at a temperature of 150° C, whereupon kneading continued for a further 2 hours, yielding a silicone oil compound (d-1).

At room temperature, 30 parts of silicone oil compound (d-1) was mixed with 70 parts of a polyoxyalkylene-modified organosiloxane (d-2) having the average compositional formula:

R¹₂R³SiO-(R¹₂SiO)ₓ-(R¹R²SiO)_{y}-SiR¹₂R³

wherein R¹ and R³ denote -CH₃ , R² denotes -C₃H₆O(C₂H₄O)₂₁(C₃H₆O)₂₁CH₃, x = 135, and y = 15, having a viscosity of 2,500 mm²/s. There was obtained an antifoam composition (D).

### Comparative Example 2

Using a gate mixer, 100 parts of the trimethylsilyl-terminated dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, 0.75 part of hexamethyldisilazane as the silica surface treating agent, and 0.1 part of water were kneaded at room temperature for one hour. The mixer was then heated at a temperature of 150°C. whereupon kneading continued for a further 1 hour. The mixer was cooled below 130°C and charged with 0.1 part of hexamethyldisilazane, whereupon kneading continued for a further one hour. The mixer was heated again at a temperature of 150°C. whereupon kneading continued for a further 1 hour, yielding a silicone oil compound (e-1).

At room temperature, 30 parts of silicone oil compound (e-1) was mixed with 70 parts of a polyoxyalkylene-modified organosiloxane (e-2) having the average compositional formula:

R¹₂R³SiO-(R¹₂SiO)ₓ- (R¹R²SiO)_{y}-SiR¹₂R³

wherein R¹ and R³ denote -CH₃, R² denotes -C₃H₆O(C₂H₄O)₂₁(C₃H₆O)₂₁CH₃. x = 135, and y = 15, having a viscosity of 2,500 mm²/s. There was obtained an antifoam composition (E).

### Tests

### Antifoaming ability (initial):

To an aqueous cutting fluid (Yushiroken FGE275 by Yushiro Chemical Industry Co., Ltd.), each sample of the antifoam compositions was added in an active component concentration of 0.5 wt%. The fluid was diluted to a 20-fold volume with water. In a 1-L beaker, the liquid was agitated at 10,000 rpm for 15 minutes by a homomixer. The total volume (mL) of the liquid and foam at the end of 15 minute agitation, and the time passed from the end of agitation until complete extinguishment of foam were measured.

### Antifoaming ability (aged 50°C × 7 days):

The aqueous cutting fluid having the antifoam composition added in an active component concentration of 0.5 wt% (as above) was aged at 50°C for 7 days. The fluid was then diluted to a 20-fold volume with water. In a 1-L beaker, the liquid was agitated at 10,000 rpm for 15 minutes by a homomixer. The total volume (mL) of the liquid and foam at the end of 15 minute agitation, and the time passed from the end of agitation until complete extinguishment of foam were measured.

### Internal addition stability:

The aqueous cutting fluid having the antifoam composition added in an active component concentration of 0.5 wt% (as above) was aged at 50° C for 7 days, after which its appearance was visually observed and rated according to the following criterion.
○: no suspended or settled matter
Δ: some suspended and settled matter
×: much suspended and settled matter

**Table 1**

| | **Antifoaming ability** | | | | **Internal addition stability** |
|---|---|---|---|---|---|
| | **Initial** | | **Aged 50°C × 7 days** | | |
| | **Volume after agitation, mL** | **Defoam time** | **Volume after agitation, mL** | **Defoam time** | |
| **Example 1** | 650 | 0'45" | 750 | 1'30" | ○ |
| **Example 2** | 850 | 1'30" | 880 | 2'30" | ○ |
| **Example 3** | 750 | 1'00" | 800 | 1'30" | ○ |
| **Comparative Example 1** | 700 | 1'00" | >1,000 | >10' | × |
| **Comparative Example 2** | 800 | 1'30" | >1,000 | 7'30" | Δ |

In respect of numerical ranges disclosed herein it will of course be understood that in the normal way the technical criterion for the upper limit is different from the technical criterion for the lower limit, i.e. the upper and lower limits are intrinsically distinct proposals.

## Claims

1. A method of preparing an oil compound suitable for use as an antifoam agent, comprising
a first step of kneading
(A) 100 parts by weight of hydrophobic organopolysiloxane having a viscosity of 10 to 100,000 mm²/s at 25°C and (B) 1 to 30 parts by weight of finely divided silica having a specific surface area of at least 50 m²/g as measured by the BET method, with
(C) 0.1 to 3% by weight, based on said silica, of silica surface treating agent and (D) 0 to 50% by weight based on the silica surface treating agent of water, or with
(E) 0.03 to 3% by weight, calculated as ammonia based on said silica, of aqueous ammonia;
a second step of heat treating the kneaded mixture resulting from the first step;
a third step of kneading the kneaded mixture resulting from the second step with (C) 5 to 20% by weight of silica surface treating agent based on the silica;
a fourth step of heat treating the kneaded mixture resulting from the third step.

2. A method of claim 1 wherein the silica surface treating agent comprises hexamethyldisilazane.

3. A method of claim 1 or 2 in which said first and/or third steps of kneading is/are at temperatures not more than 130°C

4. A method of claim 3 in which said first and/or third steps of kneading is/are at temperatures not more than 100°C.

5. A method of any one of claims 1 to 4 in which said second and/or fourth steps of heat treating, during which kneading optionally continues, is/are at temperatures from 130 to 200°C

6. A method of claim 5 in which said second and/or fourth steps of heat treating is/are at temperatures from 150 to 180°C.

7. A method of any one of claims 1 to 6 followed by incorporating the oil compound into an antifoam composition.

8. A method of any one of claims 1 to 7 followed by use of the oil compound or antifoam composition as an antifoam agent.

9. An antifoam composition comprising an oil compound prepared by a method of any one of claims 1 to 6.

## Patentansprüche

1. Verfahren zur Herstellung einer Ölverbindung, die zur Verwendung als Schaumverhütungsmittel geeignet ist, wobei das Verfahren Folgendes umfasst:
einen ersten Schritt des Knetens von
(A) 100 Gewichtsteilen hydrophobem Organopolysiloxan mit einer Viskosität von 10 bis 100.000 mm²/s bei 25°C und (B) 1 bis 30 Gewichtsteilen feinverteiltem Silica mit einer spezifischen Oberfläche von zumindest 50 m²/g, gemessen mit dem BET-Verfahren, mit
(C) Silicaoberflächenbehandlungsmittel in einer Menge von 0,1 bis 3 Gew.-%, bezogen auf Silica, und (D) Wasser in einer Menge von 0 bis 50 Gew.-%, bezogen auf das Silicaoberflächenbehandlungsmittel, oder mit
(E) wässrigem Ammoniak in einer Menge von 0,03 bis 3 Gew.-%, berechnet als Ammoniak bezogen auf Silica;
einen zweiten Schritt des Wärmebehandelns des aus dem ersten Schritt hervorgegangenen gekneteten Gemischs;
einen dritten Schritt des Knetens des aus dem zweiten Schritt hervorgegangenen gekneteten Gemischs mit (C) Silicaoberflächenbehandlungsmittel in einer Menge von 5 bis 20 Gew.-%, bezogen auf Silica;
einen vierten Schritt des Wärmebehandelns des aus dem dritten Schritt hervorgegangenen gekneteten Gemischs.

2. Verfahren nach Anspruch 1, worin das Silicaoberflächenbehandlungsmittel Hexamethyldisilazan umfasst.

3. Verfahren nach Anspruch 1 oder 2, worin der erste und/oder der dritte Schritt des Knetens bei Temperaturen von nicht mehr als 130°C stattfindet bzw. stattfinden.

4. Verfahren nach Anspruch 3, worin der erste und/oder der dritte Schritt des Knetens bei Temperaturen von nicht mehr als 100°C stattfindet bzw. stattfinden.

5. Verfahren nach einem der Ansprüche 1 bis 4, worin der zweite und/oder der vierte Schritt des Wärmebehandelns, währenddessen das Kneten gegebenenfalls fortgesetzt wird, bei Temperaturen von 130 bis 200 °C stattfindet bzw. stattfinden.

6. Verfahren nach Anspruch 5, worin der zweite und/oder der vierte Schritt des Wärmebehandelns bei Temperaturen von 150 bis 180 °C stattfindet bzw. stattfinden.

7. Verfahren nach einem der Ansprüche 1 bis 6 gefolgt von der Aufnahme der Ölverbindung in eine Schaumverhütungszusammensetzung.

8. Verfahren nach einem der Ansprüche 1 bis 7 gefolgt von der Verwendung der Ölverbindung oder der Schaumverhütungszusammensetzung als Schaumverhütungsmittel.

9. Schaumverhütungszusammensetzung, umfassend eine durch ein Verfahren nach einem der Ansprüche 1 bis 6 hergestellte Ölverbindung.

## Revendications

1. Procédé de préparation d'un composé huileux convenant à une utilisation comme agent anti-mousse, comprenant
une première étape de malaxage de
(A) 100 parties en poids d'un organopolysiloxane hydrophobe ayant une viscosité de 10 à 100 000 mm²/s à 25°C et (B) 1 à 30 parties en poids de silice finement divisée, ayant une surface spécifique d'au moins 50 m²/g telle que mesurée par la méthode BET, avec
(C) 0,1 à 3 % en poids, par rapport à ladite silice, d'un agent de traitement de surface de silice et (D) 0 à 50 % en poids d'eau par rapport à l'agent de traitement de surface de silice, ou avec
(E) 0,03 à 3 % en poids, calculé en tant qu'ammoniaque par rapport à ladite silice, d'ammoniaque aqueuse ;
une deuxième étape de traitement à la chaleur du mélange malaxé résultant de la première étape ;
une troisième étape de malaxage du mélange malaxé résultant de la deuxième étape avec (C) 5 à 20 % en poids d'agent de traitement de surface de silice par rapport à la silice ;
une quatrième étape de traitement à la chaleur du mélange malaxé résultant de la troisième étape.

2. Procédé selon la revendication 1, dans lequel l'agent de traitement de surface de silice comprend de l'hexaméthyldisilazane.

3. Procédé selon la revendication 1 ou 2, dans lequel lesdites première et/ou troisième étapes de malaxage sont à des températures non supérieures à 130 °C.

4. Procédé selon la revendication 3, dans lequel lesdites première et/ou troisième étapes de malaxage sont à des températures non supérieures à 100 °C.

5. Procédé selon l'une quelconque des revendications 1 à 4, dans lequel lesdites deuxième et/ou quatrième étapes de traitement à la chaleur, pendant lesquelles un malaxage se poursuit facultativement, sont à des températures de 130 à 200 °C.

6. Procédé selon la revendication 5, dans lequel lesdites deuxième et/ou quatrième étapes de traitement à la chaleur sont à des températures de 150 à 180 °C.

7. Procédé selon l'une quelconque des revendications 1 à 6, suivi par l'incorporation du composé huileux dans une composition anti-mousse.

8. Procédé selon l'une quelconque des revendications 1 à 7, suivi par l'utilisation du composé huileux ou d'une composition anti-mousse en tant qu'agent anti-mousse.

9. Composition anti-mousse comprenant un composé huileux préparé par un procédé selon l'une quelconque des revendications 1 à 6.
